(19) Europäisches Patentamt

European Patent Office

Office européen des brevets

(11) **EP 0 650 248 B1**

## (12) EUROPÄISCHE PATENTSCHRIFT

(45) Veröffentlichungstag und Bekanntmachung des Hinweises auf die Patenterteilung:
**16.01.2002 Patentblatt 2002/03**

(51) Int Cl.⁷: **H02M 3/145**, H02M 1/15, H02M 7/12, G05F 1/565, G05F 3/24, H03H 11/04

(21) Anmeldenummer: **94116386.7**

(22) Anmeldetag: **18.10.1994**

(54) **Netzgerät**

Power supply

Bloc d'alimentation

(84) Benannte Vertragsstaaten:
**AT BE CH DE FR GB IT LI NL SE**

(30) Priorität: **25.10.1993 DE 9316253 U**

(43) Veröffentlichungstag der Anmeldung:
**26.04.1995 Patentblatt 1995/17**

(73) Patentinhaber: **PAPST-MOTOREN GmbH & Co. KG**
**78106 St Georgen (DE)**

(72) Erfinder:
• **Doemen, Benno**
**D-78112 St. Georgen (DE)**
• **Schmider, Fritz**
**D-78132 Hornberg (DE)**

(56) Entgegenhaltungen:
WO-A-90/12445        DE-C- 3 843 260
US-A- 4 491 903      US-A- 4 814 687

## Beschreibung

Die Erfindung betrifft ein Netzgerät, insbesondere für einen Niederspannungs-Gleichstrommotor.

Derartige Motoren werden für die verschiedensten Zwecke verwendet und haben große Vorteile, u.a., weil ihre Drehzahl regelbar ist. Zu ihrer Stromversorgung - und zur Stromversorgung ähnlicher Verbraucher mit kleinem Leistungsbedarf - benötigt man preiswerte Netzgeräte, die sich für verschiedene Netzspannungen eignen, z.B. für Wechselspannungen von 70 bis 260 V und 40 bis 100 Hz. Es wird gewünscht, daß ein solches Netzgerät für alle Länder und alle Wechselspannungen verwendbar ist, wobei naturgemäß für manche Länder der Stecker ausgetauscht werden muß.

Bei Computern sind derartige Netzgeräte heute häufig, d.h. die sogenannte "internationale Version" eines Computers kann an alle Wechselspannungen zwischen 127 und 260 V angeschlossen werden. Freilich machen die höheren Spannungen dabei einige Mühe. Bei Computern handelt es sich aber um Geräte mit einem Leistungsbedarf von ca. 30 bis 100 Watt, während kleine Motoren oft nur einen Leistungsbedarf von 1 oder 2 W haben, so daß bei ihnen die Lösungen, die für Computer bekannt sind, viel zu aufwändig wären.

Aus der DE-A,3 327 003 kennt man eine elektronische Stromversorgung für digitale Uhren, Haushaltsgeräte etc., mit der diese direkt aus dem Wechselstromnetz mit Strom versorgt werden können. Bei einer Einweg-Gleichrichterschaltung für die Netzspannung ist in Reihe zu einem Vorwiderstand ein Schalttransistor geschaltet, der nur zu Beginn und Ende einer jeden Halbwelle kurzzeitig leitend gesteuert wird und dadurch einen Speicherkondensator mit kurzen Stromimpulsen auflädt. Dieser Schalttransistor wird über einen Transistor auf der Eingangsseite gesteuert, der als Schwellwertschalter wirkt und beim Überschreiten eines vorgegebenen Spannungswertes der vom Einweg-Gleichrichter gleichgerichteten Netzspannung den Schalttransistor abschaltet. Bei dieser bekannten Stromversorgung hat die Spannung am Speicherkondensator nur einen geringen Einfluß auf die Dauer der Stromimpulse, d.h. die Spannung am Speicherkondensator ist stark von der Größe des Stromes abhängig, der zu einer an den Speicherkondensator angeschlossen Last fließt.

Es ist deshalb eine Aufgabe der Erfindung, ein neues Netzgerät bereitzustellen.

Nach der Erfindung wird diese Aufgabe gelöst durch ein Netzgerät gemäß Patentanspruch 1. Man sperrt also das steuerbare Schaltglied dann, wenn die pulsierende Gleichspannung zu hoch wird, oder positiv gesagt, man gibt diesen Schalter prinzipiell dann frei, wenn die pulsierende Gleichspannung unterhalb einer Grenzspannung liegt. Bei jeder Sinus-Halbwelle kann also dieses Schaltglied - bei Bedarf - zweimal eingeschaltet werden: Einmal am Anfang einer Halbwelle, solange die Spannung noch niedrig ist, und einmal am Ende der Halbwelle, wenn die Spannung wieder niedrig wird. Dazwischen bleibt dieser Schalter gesperrt, also im Bereich der hohen Amplituden der Sinus-Halbwelle. Wird dabei die Spannung am Speicherkondensator zu groß, so wird durch das elektronische Steuerglied ein Sperrsignal für den elektronischen Schalter erzeugt, so daß der Ladestrom für den Speicherkondensator entsprechend verkürzt wird.

Der Ladestrom für den Speicherkondensator im Gleichstromkreis wird diesem also in Form kurzer Impulse zugeführt. Z.B. werden bei einem Wechselstrom mit 50 Hz diesem Kondensator pro Sekunde 200 kurze Impulse - nach Art von Nadelimpulsen - zugeführt, die bevorzugt jeweils eine Länge von etwa 350 bis 1000 µs haben können, wobei diese Länge vom Strombedarf des angeschlossenen Gerätes abhängt und also etwa zwischen 1,5 und 5 % einer Periodendauer liegt. Diese kurzen Impulse sind dabei notwendig Hochstromimpulse, d.h. wenn der Gleichstrom am Ausgang z.B. 50 mA beträgt, so haben diese Impulse Werte von ca. 1 A.

Mit Vorteil wird das steuerbare Schaltglied als elektronischer Schalter und insbesondere als FET-Transistor ausgebildet. Solche FET-Transistoren können kurzzeitig hohe Ströme leiten und eignen sich deshalb hier besonders gut.

Dabei geht man in besonders vorteilhafter Weise so vor, daß die Source-Gate-Spannung des FET-Transistors begrenzt ist, um den Strom durch diesen Transistor zu begrenzen. Insbesondere dann, wenn beim Einschalten des Netzgeräts der Speicherkondensator völlig entladen ist und deshalb im ersten Augenblick des Einschaltens als Kurzschluss wirkt, wird so ein "sanftes" Laden dieses Kondensators bewirkt und eine Überlastung des FET-Transistors wird vermieden. Bei einer solchen Anordnung ist es auch nicht unbedingt notwendig, in Reihe mit dem steuerbaren Schaitglied einen Widerstand zur Begrenzung des Stromes zu schalten, da die Strombegrenzung vom FET-Transistor übernommen werden kann.

Sofern ein Vorwiderstand verwendet wird, kann dieser mit großem Vorteil als PTC-Widerstand ausgebildet werden, denn im Falle eines Kurzschlusses wirkt er wie eine Sicherung: Sein Widerstand steigt bei Überlastung so stark an, daß der Strom durch ihn auf ungefährliche Werte begrenzt wird.

Bei einer außerordentlich vorteilhaften Weiterbildung der Erfindung ist an das Netzgerät ein Gleichstrommotor angeschlossen, der im Betrieb ein Drehzahlsignal abgibt, welches während der Zeit, in der der steuerbare Schalter nicht gesperrt ist, diesen so steuert, daß die Motordrehzahl im wesentlichen konstant gehalten wird. Dies geschieht dadurch, daß bei Überschreiten einer vorgegebenen Drehzahl des Motors über das elektronische Steuerglied ein Sperrsignal für den elektronischen Schalter erzeugt wird. Das Drehzahlsignal kann z.B. von einem Tachogenerator geliefert werden, oder es kann aus dem Motor direkt entnommen werden. Das Netzgerät kann so - praktisch ohne Mehrkosten - auch dazu verwendet werden, die Drehzahl eines angeschlossenen Motors leistungsarm zu regeln, wobei diese Drehzahl bei Bedarf am Motor selbst eingestellt werden kann. In der Praxis erweist sich das als großer Vorteil bei vielen Anwendungen.

Im übrigen hat sich in der Praxis gezeigt, daß ein erfindungsgemäßes Netzgerät bei richtiger Auslegung niedrige Verluste hat, so daß eine zu starke Erwärmung vermieden wird.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 ein Prinzipschaltbild zur Erläuterung des Arbeitsprinzips der Erfindung,

Fig. 2 ein Diagramm zur Erläuterung der Arbeitsweise der Fig. 1,

Fig. 3 ein Schaltbild einer ersten Ausführungsform der Erfindung,

Fig. 4 ein Schaltbild analog Fig. 3, aber in der Ausführung als Drehzahlregler für einen Gleichstrommotor,

Fig. 5 eine Variante zu Fig. 4, wobei der Motor hier ein kollektorloser Gleichstrommotor ist,

Fig. 6 ein Schaubild zur Erläuterung unterschiedlicher Grenzspannungen, und

Fig. 7 ein Schaltbild einer bevorzugten Variante zu Fig. 3.

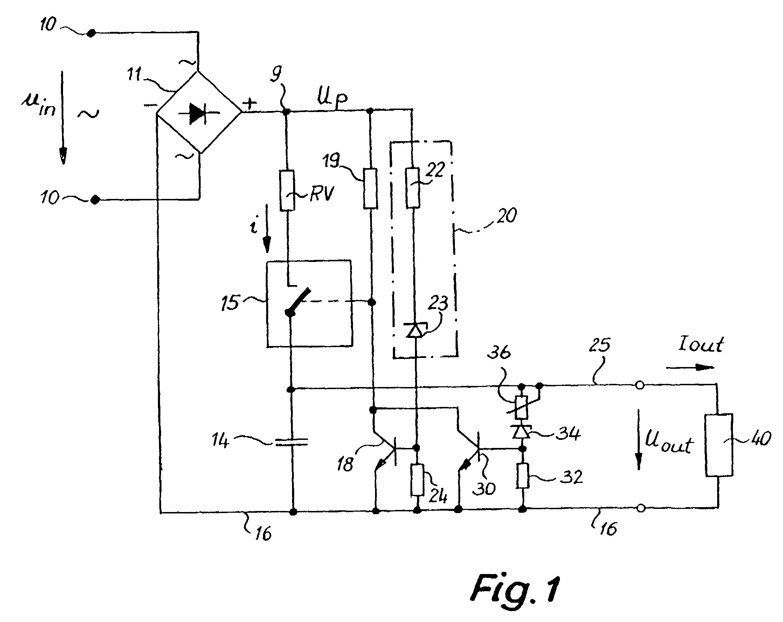

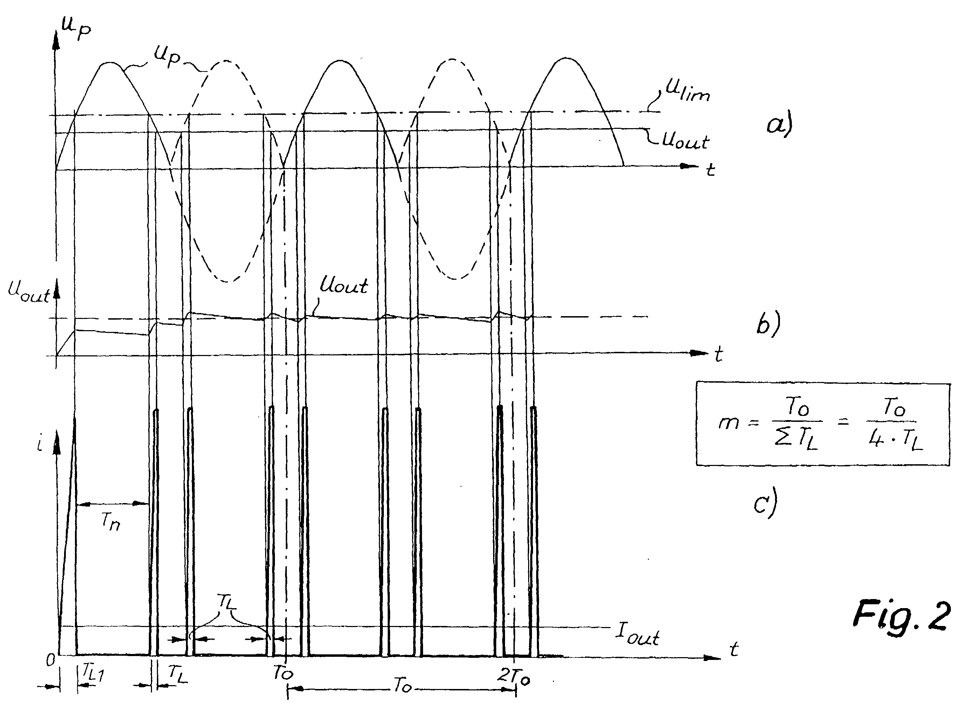

<u>Fig. 1</u> dient zur Erläuterung des Grundprinzips der Erfindung. An einem Wechselstromnetz 10 ist ein Vollwellen-Gleichrichter 11 angeschlossen, der an seinem positiven Ausgang 9 eine pulsierende Gleichspannung $U_p$ liefert, wie sie in Fig. 2a dargestellt ist. Die Eingangsspannung $u_{in}$ kann z.B. 70 bis 260 V Wechselspannung betragen (Effektivwert; RMS), und ihre Frequenz z.B. 40 bis 100 Hz.

Die Spannung $U_p$ dient zum Aufladen eines Speicherkondensators 14, und zwar über einen Vorwiderstand Rv und einen steuerbaren Schalter 15. Letzterer ist in der Praxis ein elektronischer Schalter, der kurzzeitig möglichst hohe Ströme leiten kann, also z.B. ein FET, ein bipolarer Darlington-Transistor, ein IGBD, ein GTO-Thyristor, oder dergleichen.

Das Arbeitsprinzip des Netzgeräts besteht darin, diesen Schalter 15 zu sperren, wenn die Amplitude der pulsierenden Spannung Up höher ist als ein vorgegebener Grenzwert $U_{lim}$. Dadurch entstehen pro Halbwelle zwei Bereiche $T_L$ (Fig. 2c), während deren ein Strom i vom Ausgang 9 über das Schaltglied 15 und den Kondensator 14 zu einer negativen Leitung 16 fließen kann, die mit dem negativen Ausgang des Gleichrichters 11 verbunden ist.

Der eine dieser Bereiche $T_L$ liegt im Bereich der ansteigenden Spannung $U_p$. Auf ihn folgt ein gesperrter Bereich Tn (Fig. 2c), und auf diesen folgt ein zweiter Bereich $T_L$ im Bereich der abfallenden Spannung $U_p$, wie das Fig. 2 klar zeigt.

Direkt nach dem Einschalten des Netzgeräts kann der Strom i während einer längeren Zeitdauer $T_{L1}$ fließen, da dann der Kondensator 14 ungeladen ist. Ist er geladen, so kann ein Strom i nur dann fließen, wenn der momentane Wert der Spannung $U_p$ größer ist als die Spannung am Kondensator 14, die als $U_{out}$ bezeichnet wird.

Bei einer Wechselspannung mit 50 Hz betragen die Zeitdauern $T_L$ einige hundert Mikrosekunden, wobei ihre Länge vom augenblicklichen Strombedarf eines angeschlossenen Verbrauchers abhängt.

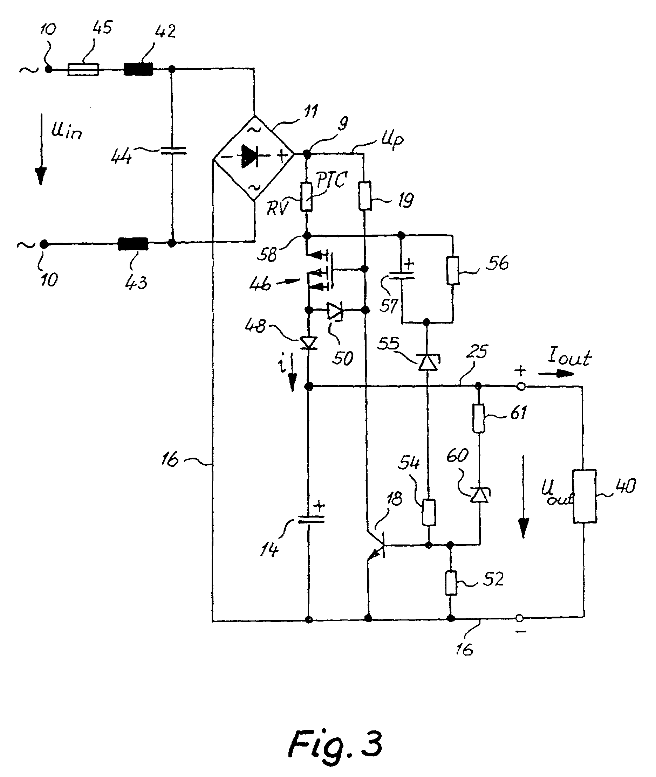

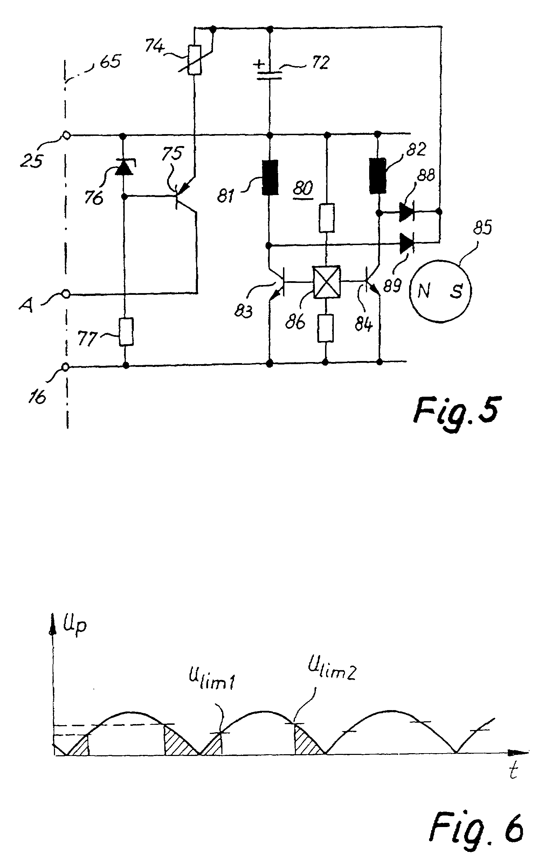

Im Rahmen der Erfindung ist es vorteilhaft, wenn bei ansteigender Spannung $U_p$ die Grenzspannung $U_{lim}$ kleiner ist als bei abfallender Spannung $U_p$ (Fig. 5), und Fig. 3 zeigt, wie dies in sehr vorteilhafter Weise erreicht werden kann.

Während der hohen Amplitudenwerte von $U_p$ wird der steuerbare Schalter 15 gesperrt durch einen npn-Steuertransistor 18. Sein Kollektor ist über einen Widerstand 19 an den Anschluß 9 angeschlossen, sein Emitter an den Anschluß 16. Die Spannung an seinem Kollektor steuert den Schalter 15 so, daß dieser geöffnet ist, wenn der Transistor 18 leitet, und daß der Schalter 15 geschlossen ist, wenn der Transistor 18 sperrt.

Zur Ansteuerung des Transistors 18 dient eine Schaltung 20 zwischen dem Anschluß 9 und der Basis des Transistors 18. Die Schaltung 20 enthält in Serie einen Widerstand 22 und eine Zenerdiode 23. Außerdem ist die Basis des Transistors 18 über einen Widerstand 24 mit dem Anschluß 16 verbunden.

Steigt also die Spannung $U_p$ an, so wird ab einem bestimmten Wert $U_{lim}$ der Transistor 18 leitend und macht den Schalter 15 nichtleitend, also geöffnet. Fällt umgekehrt die Spannung $U_p$, so wird unterhalb eines bestimmten Grenzwertes der Transistor 18 nichtleitend, da er keinen Basisstrom mehr durch die Zenerdiode 23 erhält, und folglich wird der Schalter 15 leitend, also eingeschaltet.

Auf diese Weise wird also der Bereich Tn (Fig. 2c) der Spannung $U_p$ ausgeblendet, d.h. während Tn ist der Schalter 15 immer zwangsweise geöffnet.

Zur Regelung der Spannung am Kondensator 14, also zwischen dem Anschluß 16 und einer positiven Leitung 25, dient bei Fig. 1 ein zweiter npn-Transistor 30, dessen Emitter-Kollektor-Strecke zu derjenigen des Transistors 18 parallelgeschaltet ist. Seine Basis ist über einen Widerstand 32 mit dem Anschluß 16 und über die Reihenschaltung einer Zenerdiode 34 und eines verstellbaren Widerstands 36 mit der positiven Leitung 25 verbunden.

Wird die Spannung an der Leitung 25 zu niedrig, weil der Kondensator 14 zu stark entladen ist, so sperrt die Zenerdiode 34 und mit ihr der Transistor 30, so daß der Schalter 15 eingeschaltet werden kann, wenn die Spannung $U_p$ kleiner als $U_{lim}$ ist.

Wird die Spannung an der Leitung 25 zu hoch, weil der Kondensator 14 zu stark geladen wurde, so wird die Zenerdiode 34 leitend, ebenso der Transistor 30, und macht dadurch den Schalter 15 nichtleitend. Die Transistoren 18 und 30 wirken also zusammen, d.h. nur wenn beide gesperrt sind, kann der Schalter 15 leitend werden und den Kondensator 14 laden. Innerhalb der leitenden Zeitdauern $T_L$ erfolgt also eine zusätzliche AUS-EIN-Steuerung, d.h., wenn die Spannung am Kondensator 14 zu hoch ist, wird $T_L$ entsprechend verkürzt. Dadurch wird die Spannung am Kondensator 14 auf einem gewünschten Wert gehalten, der am Potentiometer 36 eingestellt werden kann.

Zwischen den Ausgängen 25 und 16 kann eine Gleichspannung $U_{out}$ von z.B. 24 oder 48 V liegen, und sie dient zur Speisung eines Verbrauchers 40, z.B. eines kleinen Motors.

Der Vorteil ist hierbei, daß ein solcher Verbraucher praktisch in jedem Land über das erfindungsgemäße Netzgerät an das dort vorhandene, zum Anschluß elektrischer Geräte vorgesehene Wechselstromnetz angeschlossen werden kann, unabhängig von dessen Spannung oder Frequenz, und daß die Verlustleistung am Vorwiderstand Rv niedrig ist.

Dies hat folgenden Grund: Die Höhe der Verlustleistung am Widerstand Rv hängt ab von der Amplitude des Stromes i, der Größe von Rv, und vom Tastverhältnis m, das in Fig. 2 definiert ist. Für die Verlustleistung gilt folgende Formel:

$$Pv = i^2 \times Rv \times m \qquad (1)$$

Da nun m in der Größenordnung von 20 liegt, ergibt sich insgesamt eine geringe Verlustleistung. Dies ist eine Folge davon, daß während einer Phasendauer To der Netz-Wechselspannung (bei 50 Hz beträgt eine Phasendauer 20 ms, nämlich 1000 ms/50) dem Kondensator 14 insgesamt vier kurzzeitige Stromimpulse i zugeführt werden, d.h., daß alle Niederspannungsbereiche der beiden Sinushalbwellen ausgenutzt werden, um den Kondensator 14 zu laden. Die Erfindung verwendet also anstelle weniger Stromimpulse mit großer Amplitude viele Stromimpulse mit kleiner Amplitude, und da die Amplitude mit ihrem Quadrat in die Verlustleistung eingeht, ergeben sich durch die Erfindung niedrige Verluste.

Fig. 3 zeigt ein bevorzugtes Ausführungsbeispiel der Erfindung. Gleiche oder gleichwirkende Teile wie in Fig. 1 sind in Fig. 3 mit denselben Bezugszeichen bezeichnet und werden gewöhnlich nicht nochmals beschrieben.

Der Gleichrichter 11 ist hier über Entstörglieder an das Wechselstromnetz 10 angeschlossen, nämlich über zwei Drosseln 42 und 43.

Ferner sind ein Entstörkondensator 44 und eine Sicherung 45 vorgesehen, wobei die Entstörglieder hauptsächlich dazu dienen, um die Übertragung von Impulssignalen aus dem Netzgerät in das Wechselstromnetz zu verhindern.

Der Schalter 15 ist hier ein MOS-FET-Transistor 46, der kurzzeitig hohe Ströme leiten kann. Sein Drain ist mit dem Widerstand Rv verbunden; seine Source ist über eine Diode 48 mit dem Kondensator 14 verbunden, und sein Gate liegt am Kollektor des npn-Transistors 18. Zwischen Gate und Source liegt, wie dargestellt, eine Zenerdiode 50, welche das Gate beim Schaltvorgang schützt und welche bei geeigneter Bemessung bewirkt, daß der FET 46 wie eine Konstantstromquelle wirkt, was beim Einschalten des Netzgeräts den Ladestrom des Speicherkondensators 14 auf einen Wert begrenzt, für den der FET 46 zugelassen ist. Auch kann so der Vorwiderstand Rv klein gemacht werden oder evtl. sogar ganz entfallen. In der Praxis ist es aber vorteilhaft, einen Widerstand Rv zu verwenden, der als PTC-Widerstand ausgebildet ist, da dies eine sehr preiswerte und effektive Kurzschlußsicherung darstellt - zusätzlich zur Sicherung 45.

Wird in Fig. 3 der Transistor 18 gesperrt, also nichtleitend, so erhält der FET 46 über den Widerstand 19 ein entsprechendes Signal an seinem Gate vom Anschluß 9 und wird leitend.

Wird dagegen der Transistor 18 leitend, so wird der FET 46 gesperrt, also nichtleitend. In diesem Fall verhindert die Diode 48, daß sich der Kondensator 14 über den FET 46 oder die Zenerdiode 50 und den Transistor 18 entlädt und letzteren dabei zerstört.

Zur Sperrung des FET 46 während der hohen Amplitudenwerte der pulsierenden Spannung $U_p$ ist die Basis des Transistors 18, die über einen Widerstand 52 mit dem Anschluß 16 verbunden ist, über einen Widerstand 54, eine Zenerdiode 55 und die Parallelschaltung eines Widerstands 56 und eines Kondensators 57 mit einem Punkt 58 verbunden, nämlich dem Drain des FET 46.

Dies bewirkt eine Mitkopplung nach Art eines Schmitt-Triggers und auch eine gewisse Schalt-Hysterese: Wird der FET 46 leitend, so geht das Potential des Punktes 58 nach unten und senkt folglich das Potential der Basis des Transistors 18, so daß dieser noch stärker gesperrt wird. Wird umgekehrt der FET 46 gesperrt, so geht das Potential des Punktes 58 nach oben und macht dadurch den Transistor 18 noch stärker leitend, wodurch der FET 46 noch schneller gesperrt wird. Dies reduziert die Verlustleistung in ihm, macht den Schaltvorgang sicher, und vermeidet Schwingungen.

Analog der Schaltung 20 der Fig. 1 bewirken die Schaltelemente 54, 55, 56, 57, daß der Transistor 18 leitend wird, wenn der Augenblickswert der pulsierenden Spannung $U_p$ größer als $U_{lim}$ wird, wodurch in diesem Fall der FET 46 gesperrt wird.

Der Kondensator 57 bewirkt aber dabei einen sehr erwünschten Unterschied der Grenzspannungen $U_{lim1}$ bei ansteigender Spannung $U_p$, und $U_{lim2}$ bei abfallender Spannung $U_p$, wie in Fig. 6 dargestellt, d.h. wenn $U_p$ abnimmt, ist $U_{lim}$ höher, als wenn $U_p$ zunimmt.

Bei zunehmendem $U_p$ hat sich der Kondensator 57 über den Widerstand 56 teilweise entladen und hat folglich nur eine geringe Spannung. Das bewirkt ein niedriges $U_{lim1}$. Anschließend lädt er sich nun durch die hohen Amplitudenwerte von $U_p$ auf, so daß sich seine Ladespannung zur Spannung der Zenerdiode 55 addiert und folglich der Grenzwert $U_{lim2}$ höher wird. Dies bewirkt, daß die Stromimpulse i zum Kondensator 14 sowohl bei zunehmender Spannung $U_p$ wie bei abnehmender Spannung $U_p$ etwa gleich groß werden. Dies verbessert den Wirkungsgrad des Netzgeräts, da, wie bereits erläutert, der Wirkungsgrad am besten wird, wenn alle Stromimpulse i etwa dieselbe Amplitude und Zeitdauer haben.

Zu beachten ist, daß der Kondensator 57 nicht zur Gesamtheit der Widerstände 54 und 56 parallelgeschaltet ist, sondern nur zum Teilwiderstand 56. Dies verhindert, daß beim Einschalten des Netzgeräts der Transistor 18 zerstört wird.

Von der Basis des Transistors 18 führt außerdem die Reihenschaltung einer Zenerdiode 60 und eines Widerstands 61 zur Leitung 25. Wird die Spannung am Kondensator 14 zu hoch, so wird die Zenerdiode 60 leitend, und mit ihr der Transistor 18, so daß der FET 46 gesperrt wird. Ist umgekehrt die Spannung am Kondensator 14 zu niedrig, so sperrt die Zenerdiode 60, und der Transistor 18 wird vom Punkt 58 her nur durch die Spannung $U_p$ gesteuert.

Der Widerstand 61 kann auch hier verstellbar sein, um die Spannung $U_{out}$ einstellen zu können.

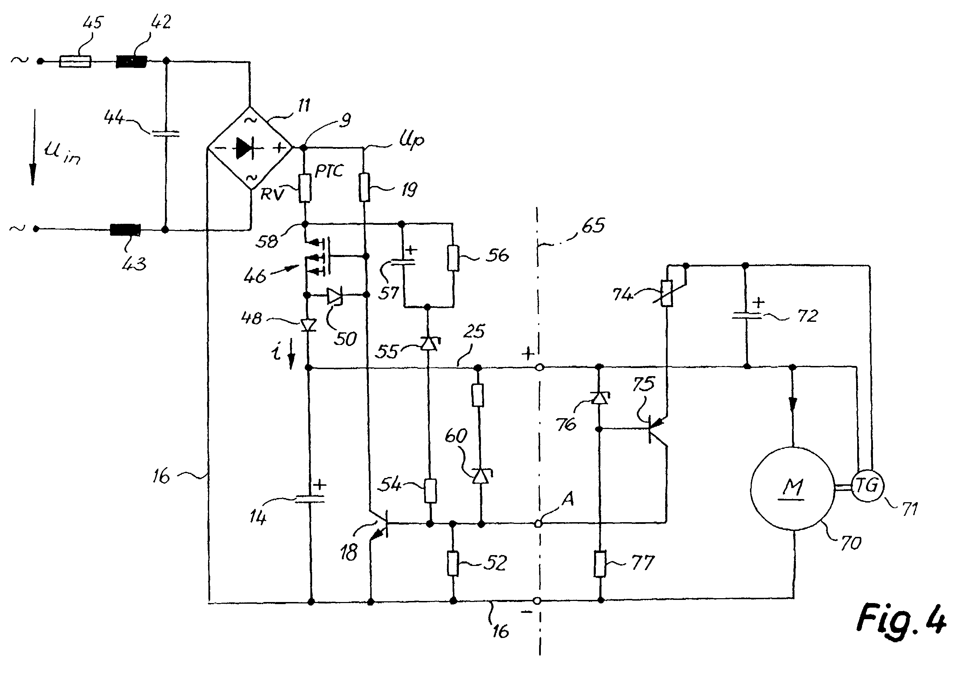

In Fig. 4 stimmt das Netzgerät links der strichpunktierten Linie 65 mit der Schaltung nach Fig. 3 überein, mit der einzigen Ausnahme, daß die Basis des Transistors 18 mit einem Anschluß A verbunden ist.

Bei Fig. 4 dient das Netzgerät zur Stromversorgung eines kleinen gleichstrommotors 70, der mit einem Tachogenerator 71 versehen ist, welcher an seinem Ausgang eine Gleichspannung liefert, die durch einen Kondensator 72 geglättet wird. Ihr positiver Wert wird über einen verstellbaren Widerstand 74 (zur Drehzahleinstellung) der Basis eines pnp-Transistors 75 zugeführt, dessen Kollektor mit dem Anschluß A verbunden ist. Seine Basis ist über eine Zenerdiode 76 mit der Leitung 25 und über einen Widerstand 77 mit dem Anschluß 16 verbunden.

Läuft -der Motor 70 zu schnell, so wird die Spannung an seinem Tachogenerator 71 zu hoch, und der Transistor 75 wird leitend, wodurch der Transistor 18 einen Basisstrom erhält, leitend wird, und den FET 46 sperrt. Sinkt dadurch die Drehzahl des Motors 70, so wird der Transistor 75 wieder gesperrt, und es wird dann in der bereits beschriebenen Weise die Spannung $U_{out}$ auf einen konstanten Wert geregelt. Auf diese Weise kann mit dem erfindungsgemäßen Netzgerät in sehr einfacher Weise die Drehzahl eines Motors 70 geregelt werden.

Fig. 5 zeigt dasselbe für eine einfache Bauart eines kollektorlosen gleichstrommotors 80, wie er z.B.

aus der DE-PS 23 46 380 bekannt ist. Naturgemäß ist das nur ein Beispiel; jede bekannte Bauart eines kollektorlosen Gleichstrommotors kann am erfindungsgemäßen Netzgerät betrieben werden.

Der Motor 80 wird in der gleichen Weise an das Netzgerät angeschlossen wie der Motor 70 in Fig. 4, weshalb das Netzgerät in Fig. 5 nicht nochmals dargestellt ist. Gleiche oder gleichwirkende Teile wie in Fig. 4 werden mit denselben Bezugzeichen bezeichnet wie dort und gewöhnlich nicht nochmals beschrieben.

Der Motor 80 hat in seinem Stator zwei Wicklungsstränge 81, 82, die jeweils über einen npn-Transistor 83 bzw. 84 Strom erhalten. Der permanentmagnetische Rotor ist mit 85 bezeichnet. Die Transistoren 83 und 84 werden von einem Hallgenerator 86 gesteuert, welcher im Magnetfeld des Rotors 85 angeordnet ist und dessen Stellung abfühlt, also als Rotorstellungssensor wirkt.

Die Stränge 81, 82 führen abwechselnd Strom, d.h. wenn der Strang 81 Strom führt, weil sein Transistor 83 leitend ist, ist der Strang 82 stromlos. Der Rotor 85 induziert aber im Strang 82 eine zur Drehzahl proportionale Wechselspannung, und diese wird über eine Diode 88 dem Kondensator 72 zugeführt. Dasselbe gilt für den Strang 81 und seine Diode 89. Am Kondensator 72 erhält man folglich eine Gleichspannung, die zur Drehzahl des rotors 85 proportional ist. Diese wird über den (zur Drehzahleinstellung verstellbaren) Widerstand 74 dem Emitter des pnp-Transistors 75 zugeführt. Der Rest der Schaltung entspricht Fig. 4, ebenso die Wirkungsweise, d.h. bei zu hoher Drehzahl wird der Transistor 75 leitend, ebenso der Transistor 18, und dadurch wird der FET 46 gesperrt, wodurch die Drehzahl wieder auf den gewünschten Wert sinkt. Derartige Motoren 80 sind besonders wartungsarm und haben eine lange Lebensdauer. Außerdem haben sie keinen funkenerzeugenden Kollektor, was z.B. in einer Laborumgebung von Vorteil sein kann.

In gleicher Weise kann über den Eingang A z. B. eine Temperatur geregelt werden, oder ein beliebiger sonstiger Vorgang. Ebenso ist ein Ausschalten des Netzgeräts möglich, indem man dem Eingang A einen entsprechenden Strom zuführt.

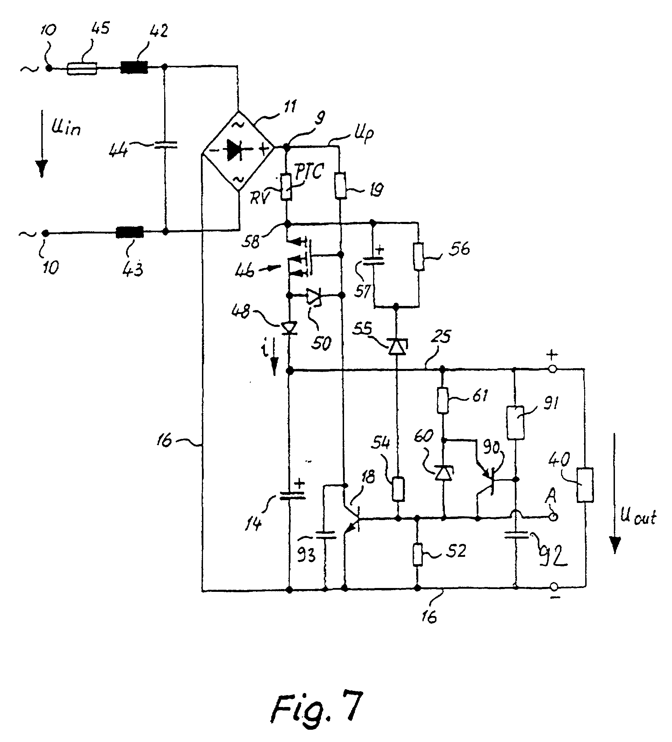

Fig. 7 zeigt eine Variante zu Fig. 3. Gleiche oder gleichwirkende Teile wie in den vorhergehenden Figuren werden in Fig. 7 mit denselben Bezugzeichen bezeichnet und gewöhnlich nicht nochmals beschrieben.

Parallel zur Zenerdiode 60 ist hier die Emitter-Kollektor-Strecke eines pnp-Transistors 90 geschaltet, so daß die Spannung an dieser Zenerdiode 60 herabgesetzt wird, wenn der Transistor 90 leitend wird. Die Basis des Transistors 90 ist über einen Ladewiderstand 91 mit der Plusleitung 25 und über einen Kondensator 92 mit der Minusleitung 16 verbunden. Zum Transistor 18 ist in der dargestellten Weise ein Kondensator 93 parallelgeschaltet, um die Schaltvorgänge am FET 46 zu verlangsamen.

Da - bei Fig. 7 - beim Einschalten des Netzgeräts der Kondensator 92 entladen ist, hat die Basis des Transistors 90 beim Einschalten etwa das Potential der Minusleitung 16, so daß der Transistor 90 voll leitend wird, sobald die Spannung am Kondensator 14 einen gewissen Mindestwert erreicht hat. Dadurch wird auch der Transistor 18 leitend, so daß der FET 46 schon bei relativ niedrigen Sannungen gesperrt wird. Dies verhindert, daß der Anlaufstrom zu groß wird. Nach der Aufladung des Kondensators 92 (über den Ladewiderstand 91) sperrt der Transistor 90, und die Schaltung arbeitet so, wie bei Fig. 3 beschrieben, wobei durch den Kondensator 93 die Schaltvorgänge am FET 46 verlangsamt werden, so daß die Funkstörungen reduziert werden.

Die zusätzlichen Schaltelemente 90, 91 und 92 bringen außer dem beschriebene "Softstart" auch eine verbesserte Symmetrierung der Stromimpulse durch den FET 46 über einen relativ weiten Lastbereich. Dies ist z.B. wichtig bei Motoren, deren Last relativ großen Schwankungen unterworfen ist.

Die Drosseln 42 und 43 können bei bestimmten Anwendungen durch Widerstände ersetzt werden.

Die Variante nach Fig. 7 kann mit großem Vorteil bei den Motoren nach Fig. 4 und 5 verwendet werden, eignet sich aber naturgemäß für beliebige Verbraucher 40.

Die Erfindung ist also vielfach variierbar, und in ihrem Rahmen sind zahlreiche Modifikationen möglich. Insbesondere ist es sehr vorteilhaft, den Widerstand Rv als PTC-Widerstand auszuführen, da dann - bei einer Zerstörung des FET 46 - das Gerät kurzschlußfest wird, denn durch die Erwärmung von Rv steigt dann dessen Widerstand stark an und begrenzt dadurch den Strom auf ungefährliche Werte.

**Patentansprüche**

1. Netzgerät, insbesondere für einen Niederspannungs-Gleichstrommotor (70; 80),

   zum Umsetzen einer pulsierenden Gleichspannung ($U_p$) in eine niedrigere Gleichspannung ($U_{out}$),
   mit einem einen Speicherkondensator (14) enthaltenden Gleichstromkreis (16, 25),
   und mit einem zur Ladung des Speicherkondensators (14) aus der pulsierenden Gleichspannung ($U_p$) dienenden elektronischen Schalter (46),
   welcher nur zu Beginn und Ende einer Halbwelle der pulsierenden Gleichspannung ($U_P$) leitend gesteuert wird, um dem Speicherkondensator (14) Stromimpulse (i) zu seiner Ladung zuzuführen, und welcher in denjenigen Bereichen (Tn) der pulsierenden Gleichspannung ($U_p$) gesperrt ist, in denen der Momentanwert dieser pulsierenden Gleichspannung ($U_p$) einen vorgegebenen Grenzwert überschreitet, **dadurch gekennzeichnet, dass** ein von der Spannung ($U_{out}$) am Speicherkondensator (14) gesteuertes elektronisches Steuerglied (18; 30) vorgesehen ist, welches bei Überschreiten einer vorgegebenen Spannung am Speicherkondensator (14) ein Sperrsignal für den elektronischen Schalter (46) abgibt.

2. Netzgerät nach Anspruch 1, bei welchem dem elektronischen Steuerglied (18) auch die pulsierende Gleichspannung ($U_p$) zugeführt wird, um beim Überschreiten eines vorgegebenen Augenblickswert dieser pulsierenden Gleichspannung ($U_p$) dem elektronischen Schalter (46) ein Sperrsignal über das elektronische Steuerglied (18) zuzuführen.

3. Netzgerät nach Anspruch 1 oder 2, bei welchem dem elektronischen Steuerglied (18) ein Drehzahlsignal von einem an das Netzgerät angeschlossenen Gleichstrommotor (70; 80) zuführbar ist, um bei Überschreiten einer vorgegebenen Drehzahl dieses Motors über das elektronische Steuerglied (18) ein Sperrsignal für den elektronischen Schalter (46) zu erzeugen.

4. Netzgerät nach einem oder mehreren der Ansprüche 1 bis 3, bei welchem elektronisches Steuerglied (18) und elektronisches Schaltglied (46) durch eine Mitkopplung (55, 56, 57) mileinander gekoppelt sind, um zuverlässige Umschaltvorgänge zu erreichen.

5. Netzgerät nach Anspruch 4, bei welchem ein Spannungsabfall an einem Vorwiderstand (Rv) des elektronischen Schalters (46) dem elektronischen Steuerglied (18) als Mitkopplungssignal zuführbar ist.

6. Netzgerät nach Anspruch 5, bei welchem der Vorwiderstand (Rv) mindestens teilweise als PTC-Widerstand ausgebildet ist.

7. Netzgerät nach Anspruch 5 oder 6, bei welchem der Spannungsabfall an dem Vorwiderstand (Rv) dem elektronischen Steuerglied (18) über eine Parallelschaltung aus einem Widerstand (56) und einem Kondensator (57) zuführbar ist, um bei den Schaltvorgängen des elektronischen Schahglieds (46) eine Schalthysterese zu erhalten.

8. Netzgerät nach Anspruch 7, bei welchem die Parallelschaltung aus Widerstand (56) und Kondensator (57) mit einer Zenerdiode (55) in Reihe geschaltet ist.

9. Netzgerät nach einem oder mehreren der vorhergehenden Ansprüche, bei welchem dem elektronischen Steuerglied (18) ein Kondensator (93) zugeordnet ist, welcher die Umschaltvorgänge dieses Steuerglieds (18) und damit des elektronischen Schaltglieds (46) verlangsamt.

10. Netzgerät nach einem oder mehreren der vorhergehenden Ansprüche, bei welchem dem elektronischen Steuerglied (18) eine zum Speicherkondensator (14) parallelgeschaltete Serienschaltung aus einer Zenerdiode (60) und einem Widerstand (61, 52) zugeordnet ist, welche so angeordnet ist, daß bei Leitendwerden der Zenerdiode (60) durch das elektronische Steuerglied (18) ein Sperrsignal für den elektronischen Schalter (46) erzeugt wird.

11. Netzgerät nach Anspruch 10, bei welchem der Zenerdiode (60) ein Transistor (90) zugeordnet ist, welcher direkt nach dem Einschaltvorgang des Netzgeräts schon bei einem niedrigen Wert der pulsierenden Gleichspannung ($U_p$) leitend wird und dabei - über das elektronische Steuerglied (18) - ein Sperrsignal für den elektronischen Schalter (46) bewirkt und so das Entstehen eines Einschaltstromimpulses hoher Amplitude verhindert (Fig. 7).

12. Netzgerät nach Anspruch 11, bei welchem dem Transistor (90) ein Zeitglied (91, 92) zugeordnet ist, welches nach Ablauf einer vorgegebenen Zeitspanne ein Sperren dieses Transistors (90) bewirkt.

13. Netzgerät nach einem oder mehreren der vorhergehenden Ansprüche, bei welchem der elektronische Schalter als FET-Transistor (46) ausgebildet ist.

14. Netzgerät nach Anspruch 13, bei welchem die Source-Gate-Spannung des FET-Transistors (46) begrenzt ist, um den Strom (i) durch diesen Transistor (46) zu begrenzen.

15. Netzgerät nach Anspruch 14, bei welchem parallel zur Source-Gate-Strecke des FET-Transistors (46) eine Zenerdiode (50) angeordnet ist.

16. Netzgerät nach Anspruch 15, bei welchem die Zenerdiode (50) dazu ausgebildet ist, um die Source-Gate-Spannung und damit den Strom durch den FET-Transistor (46) zu begrenzen.

17. Netzgerät nach einem oder mehreren der vorhergehenden Ansprüche, bei welchem die pulsierende Gleichspannung durch Vollweg-Gleichrichtung einer Netz-Wechselspannung erzeugt wird.

18. Netzgerät nach einem oder mehreren der vorhergehenden Ansprüche, bei welchem der Wert der pulsierenden Gleichspannung ($U_p$)

a) von einem Grundwert zu einer ersten Grenzspannung ($U_{lim1}$) ansteigt, und
b) von einer zweiten Grenzspannung ($U_{lim2}$) bis auf einen Grundwert abfällt, und das steuerbare elektronische Schaltglied (46) in denjenigen Bereichen (Tn) jeder Halbwelle gesperrt wird, in denen der Augenblickswert dieser Spannung beim Anstieg über der ersten Grenzspannung ($U_{lim1}$) und beim Abfall über der zweiten Grenzspannung ($U_{lim2}$) liegt,

wobei die erste Grenzspannung ($U_{lim1}$) kleiner ist als die zweite Grenzspannung ($U_{lim2}$).

19. Netzgerät nach einem oder mehreren der vorhergehenden Ansprüche zur Stromversorgung eines Niederspannungs-Gleichstrommotors (70; 80), welcher im Betrieb eine drehzahlabhängige Spannung abgibt, welche ebenfalls den zur Ladung des Speicherkondensators (14) dienenden elektronischen Schalter (46) steuert, um bei zu hoher Drehzahl des Motors (70; 80) denjenigen Bereich (Tn) der pulsierenden Gleichspannung ($U_p$) zu vergrößern, in dem der zur Ladung des Speicherkondensators (14) dienende elektronische Schalter (46) gesperrt wird.

## Claims

1. Power supply unit, in particular for a low-voltage direct-current motor (70; 80), for transforming a pulsating direct-current voltage ($U_p$) into a lower direct-current voltage ($U_{out}$), with a direct-current circuit (16, 25) containing a storage capacitor (14), and with an electronic switch (46) which serves to charge the storage capacitor (14) from the pulsating direct-current voltage ($U_p$) and which is only switched on at the beginning and end of a half wave of the pulsating direct-current voltage ($U_p$) in order to feed current pulses (i) to the storage capacitor (14) to charge it, and which is switched off in the ranges ($T_n$) of the pulsating direct-current voltage ($U_p$) in which the instantaneous value of this pulsating direct-current voltage ($U_p$) exceeds a predetermined limit value, **characterised in that** an electronic control member (18; 30) is provided which is controlled by the voltage ($U_{out}$) at the storage capacitor (14) and emits a switch-off signal for the electronic switch (46) when a predetermined voltage is exceeded at the storage capacitor (14).

2. Power supply unit according to claim 1, in which the pulsating direct-current voltage ($U_p$) is also fed to the electronic control member (18) in order to feed a switch-off signal via the electronic control member (18) to the electronic switch (46) when this pulsating direct-current voltage ($U_p$) exceeds a predeter-

mined instantaneous value.

3. Power supply unit according to claim 1 or 2, in which a speed signal from a direct-current motor (70; 80) connected to the power supply unit can be fed to the electronic control member (18) in order to produce a switch-off signal for the electronic switch (46) via the electronic control member (18) when the speed of this motor exceeds a predetermined value.

4. Power supply unit according to one or more of claims 1 to 3, in which the electronic control member (18) and the electronic switch (46) are coupled together by positive feedback (55, 56, 57) in order to obtain reliable switching operations.

5. Power supply unit according to claim 4, in which a voltage drop at a dropping resistor ($R_v$) of the electronic switch (46) can be fed to the electronic control member (18) as feedback signal.

6. Power supply unit according to claim 5, in which the dropping resistor ($R_v$) is at least partly embodied as a PTC resistor.

7. Power supply unit according to claim 5 or 6, in which the voltage drop at the dropping resistor ($R_v$) can be fed to the electronic control member (18) via a parallel circuit consisting of a resistor (56) and a capacitor (57) in order to obtain a switching hysteresis during the switching operations of the electronic switch (46).

8. Power supply unit according to claim 7, in which the parallel circuit consisting of the resistor (56) and the capacitor (57) is connected in series with a zener diode (55).

9. Power supply unit according to one or more of the preceding claims, in which the electronic control member (18) is associated with a capacitor (93) which slows the switching operations of this control member (18) and hence of the electronic switch (46).

10. Power supply unit according to one or more of the preceding claims, in which the electronic control member (18) is associated with a series circuit consisting of a zener diode (60) and a resistor (61, 52) and connected in parallel with the storage capacitor (14) and which is arranged so that a switch-off signal is produced for the electronic switch (46) when the zener diode (60) is switched on by the electronic control member (18).

11. Power supply unit according to claim 10, in which the zener diode (60) is associated with a transistor (90) which is switched on directly after the power supply unit is switched on while the value of the pulsating direct-current voltage ($U_p$) is still low and in the process produces a switch-off signal for the electronic switch (46) - via the electronic control member (18) - and so prevents the production of a high-amplitude switch-on current pulse (fig. 7).

12. Power supply unit according to claim 11, in which the transistor (90) is associated with a timing member (91, 92) which switches off this transistor (90) after a predetermined length of time has elapsed.

13. Power supply unit according to one or more of the preceding claims, in which the electronic switch is embodied as an FET transistor (46).

14. Power supply unit according to claim 13, in which the source-gate voltage of the FET transistor (46) is limited in order to limit the current (i) through this transistor (46).

15. Power supply unit according to claim 14, in which a zener diode (50) is arranged parallel with the source-gate junction of the FET transistor (46).

16. Power supply unit according to claim 15, in which the zener diode (50) is designed to limit the source-gate voltage and hence the current through the FET transistor (46).

17. Power supply unit according to one or more of the preceding claims, in which the pulsating direct-current voltage is produced by full-wave rectification of a mains alternating-current voltage.

18. Power supply unit according to one or more of the preceding claims, in which the value of the pulsating direct-current voltage ($U_p$)

    a) rises from a base value to a first limit voltage ($U_{lim1}$), and
    b) falls from a second limit voltage ($U_{lim2}$) to a base value,

and the controllable electronic switch (46) is switched off in the ranges ($T_n$) of each half wave in which the instantaneous value of this voltage lies above the first limit voltage ($U_{lim1}$) when rising and above the second limit voltage ($U_{lim2}$) when falling, whereby the first limit voltage ($U_{lim1}$) is smaller than the second limit voltage ($U_{lim2}$).

19. Power supply unit according to one or more of the preceding claims, to supply the power of a low-voltage direct-current motor (70; 80) which in service emits a speed-dependent voltage which also controls the electronic switch (46) serving to charge the storage capacitor (14) in order to enlarge the range ($T_n$) of the pulsating direct-current voltage ($U_p$) in which the electronic switch (46) serving to charge the storage capacitor (14) is switched off when the speed of the motor (70; 80) is too high.

## Revendications

1. Bloc d'alimentation, en particulier pour un moteur à courant continu basse tension (70; 80), pour convertir une tension continue ($U_p$) pulsatoire en une tension continue ($U_{out}$) plus faible, avec un circuit à courant continu (16,25) incluant un condensateur de stockage (14), et àvec un interrupteur (46) électronique servant au chargement du condensateur de stockage (14) à partir de la tension continue ($U_p$) pulsatoire, lequel est commandé de façon directrice seulement au début et à la fin d'une demi-onde de la tension continue ($U_p$) pulsatoire, pour amener au condensateur de stockage (14) des impulsions de courant (i) pour son chargement, et qui est bloqué dans les plages ($T_n$) de la tension continue ($U_p$) pulsatoire dans lesquelles la valeur momentanée de cette tension continue ($U_p$) pulsatoire dépasse une valeur limite prédéfinie, **caractérisé en ce qu'**il est prévu un organe de commande (18; 30) électronique commandé par la tension ($U_{out}$) sur le condensateur de stockage (14), lequel émet un signal de blocage pour l'interrupteur (46) électronique en cas de dépassement d'une tension prédéfinie sur le condensateur de stockage (14).

2. Bloc d'alimentation selon la revendication 1, sur lequel la tension continue ($U_p$) pulsatoire est aussi amenée à l'organe de commande (18) électronique pour amener un signal de blocage via l'organe de commande (18) électronique à l'interrupteur (46) électronique en cas de dépassement d'une valeur momentanée prédéfinie de cette tension continue ($U_p$) pulsatoire.

3. Bloc d'alimentation selon la revendication 1 ou 2, sur lequel on peut amener à l'organe de commande (18) électronique un signal de régime à partir d'un moteur à courant continu (70;80) raccordé au bloc d'alimentation, afin de générer un signal de blocage pour l'interrupteur (46) électronique via l'organe de commande (18) électronique en cas de dépassement d'un régime prédéfini de ce moteur.

4. Bloc d'alimentation selon l'une quelconque ou plusieurs des revendications 1 à 3, sur lequel un organe de commande (18) électronique et un organe de commutation (46) électronique sont couplés entre eux par un couplage positif (55, 56, 57) afin d'obtenir des opérations de commutation fiables.

5. Bloc d'alimentation selon la revendication 4, sur lequel une chute de tension sur une résistance additionnelle (Rv) de l'interrupteur (46) électronique peut être amené à l'organe de commande (18) électronique sous la forme d'un signal de couplage positif.

6. Bloc d'alimentation selon la revendication 5, sur lequel la résistance additionnelle (Rv) est conçue au moins partiellement comme résistance à coefficient positif de température.

7. Bloc d'alimentation selon la revendication 5 ou 6, sur lequel la chute de tension sur la résistance additionnelle (Rv) peut être amenée à l'organe de commande (18) électronique via un circuit parallèle comprenant une résistance (56) et un condensateur (57), afin d'obtenir une hystérésis de commutation lors des opérations de commutation de l'organe de commutation (46) électronique.

8. Bloc d'alimentation selon la revendication 7, sur lequel le circuit parallèle comprenant une résistance (56) et un condensateur (57) est monté en série avec une diode de Zener (55).

9. Bloc d'alimentation selon l'une quelconque ou plusieurs des revendications précédentes, sur lequel un condensateur (93) est attribué à l'organe de commande (18) électronique, lequel condensateur ralentit les opérations de commutation de cet organe de commande (18) et donc de l'organe de commutation (46) électronique.

10. Bloc d'alimentation selon l'une quelconque ou plusieurs des revendications précédentes, sur lequel un circuit série branché en parallèle avec le condensateur de stockage (14) et comprenant une diode de Zener (60) et une résistance (61, 52) est attribuée à l'organe de commande (18) électronique, lequel circuit est disposé de telle façon qu'un signal de blocage pour l'interrupteur électronique (46) est généré par l'organe de commande (18) électronique au cas où la diode de Zener (60) devient conductrice.

11. Bloc d'alimentation selon la revendication 10, sur lequel un transistor (90) est attribué à la diode de Zener (60), lequel transistor devient conducteur directement après l'enclenchement du bloc d'alimentation même avec une faible valeur de la tension continue ($U_p$) pulsatoire et entraîne alors un signal de blocage pour l'interrupteur (46) électronique via l'organe de commande (18) électronique et empêche ainsi la naissance d'une impulsion de courant de mise en route d'amplitude élevée (fig. 7).

12. Bloc d'alimentation selon la revendication 11, sur lequel un relais de temporisation (91, 92) est attribué au transistor (90), lequel relais entraîne un blocage de ce transistor (90) après l'expiration d'un laps de temps prédéfini.

13. Bloc d'alimentation selon l'une quelconque ou plusieurs des revendications précédentes, sur lequel l'interrupteur électronique est conçu comme un transistor à effet de champ (46).

14. Bloc d'alimentation 13, sur lequel la tension source-grille du transistor à effet de champ (46) est limitée pour limiter le courant (i) par ce transistor (46).

15. Bloc d'alimentation selon la revendication 14, sur lequel une diode de Zener (50) est disposée parallèlement au tronçon source-grille du transistor à effet de champ (46).

16. Bloc d'alimentation selon la revendication 15, sur lequel la diode de Zener (50) est conçue pour limiter la tension source-grille et donc le courant traversant le transistor à effet de champ (46).

17. Bloc d'alimentation selon l'une quelconque ou plusieurs des revendications précédentes, sur lequel la tension continue pulsatoire est générée par un redressement pleine-onde d'une tension alternative de réseau.

18. Bloc d'alimentation selon l'une quelconque ou plusieurs des revendications précédentes, sur lequel la valeur de la tension continue (Up) pulsatoire

 a) augmente d'une valeur de base à une première tension limite ($U_{lim1}$) et
 b) décroît d'une deuxième tension limite ($U_{lim2}$) jusqu'à une valeur de base,

et l'organe de commutation (46) électronique contrôlable est bloqué dans les zones (Tn) de chaque demi-onde dans lesquelles la valeur momentanée de cette tension se situe au-dessus de la première tension limite ($U_{lim1}$) lors de l'accroissement et au-dessus de la deuxième tension limite ($U_{lim2}$) lors du décroissement, la première tension limite ($U_{lim1}$) étant inférieure à la deuxième tension limite ($U_{lim2}$).

19. Bloc d'alimentation selon l'une quelconque ou plusieurs des revendications précédentes pour l'alimentation électrique d'un moteur à courant continu et basse tension (70;80), lequel émet pendant le service une tension dépendante du régime qui commande également l'interrupteur (46) électronique servant au chargement du condensateur de stockage (14), afin d'augmenter, en cas de régime trop élevé du moteur (70;80), la plage (Tn) de la tension continue pulsatoire (Up) où l'interrupteur (46) électronique servant au chargement du condensateur de stockage (14) est bloqué.

Fig.1

EP 0 650 248 B1

$$m = \frac{T_0}{\Sigma T_L} = \frac{T_0}{4 \cdot T_L}$$

*Fig. 2*

EP 0 650 248 B1

**Fig. 3**

Fig.4

EP 0 650 248 B1

EP 0 650 248 B1

**Fig.5**

**Fig. 6**

15

Fig. 7